# EUROPEAN PATENT SPECIFICATION

(11) **EP 1 313 052 B1**
(45) Date of publication and mention of the grant of the patent: **13.12.2006**
(21) Application number: 02257550.0
(22) Date of filing: 31.10.2002
(51) Int. Cl.: G06Q 30/00

(54) **Method of and apparatus for customer preference estimation**
Verfahren und Vorrichtung zur Kundenpräferenzsschätzung
Méthode et dispositif pour l'évaluation de préférence de clients

(30) Priority: 08.11.2001 JP 2001343409
(43) Date of publication of application: 21.05.2003
(73) Proprietor: NISSAN MOTOR COMPANY, LIMITED, Yokohama-shi, Kanagawa 221-0023 (JP)
(72) Inventor: Sato, Koji, Yokohama-shi, Kanagawa (JP); Abe, Noriyuki, Yokohama-shi, Kanagawa (JP); Okamoto, Satoshi, Fujisawa-shi, Kanagawa (JP); Takada, Masayuki, Isezaki-shi, Gunma (JP)
(74) Representative: Collins, John David

(56) References cited:
- US-B1- 6 314 364
- PATENT ABSTRACTS OF JAPAN vol. 2000, no. 08 06 October 2000 & JP 2000 132618 A (HITACHI LTD.) 12 May 2000

## Description

The present invention relates to a method of and an apparatus for estimating customer preference and providing information that matches the customer preference.

There is a method of customer preference estimation support in the related art (see Japanese Laid-Open Patent Publication No. 2000-132618) in which a preference of a customer is estimated by collecting information on the customer's product selection history and the customer preference thus estimated is used in electronic trade. In this method, a customer preference corresponding to a given product attribute is expressed as a numerical value based upon the customer's product selection history to estimate the degree of customer preference for a product.

However, in the method of customer preference estimation in the related art described above, in which the customer preference is estimated entirely based upon information on the past product selection history of the customer who is the target of the preference estimation, no product selection history information can be obtained for a new customer, and thus, the preference of the new customer cannot be estimated. In addition, since the preference estimation is performed for an existing customer based upon past product selection history information alone, there is another problem in that the customer is never presented with any novel or fresh selection ideas.

US-A-6 314 364 provides a means for safely allowing an operator of a vehicle to navigate in today's crowded environment.

It would be desirable to be able to provide the customer with information matching his/her preference by estimating the customer preference that reflects a change occurring in the customer's state.

Accordingly the present invention provides a method of providing information to a vehicle driver comprising: recording in advance sets of information provision history data in a database at a center system each indicating an information providing program selection method used to select an information providing program to provide information previously to a vehicle driver, a corresponding vehicle state according to which the selection method was determined, and a vehicle driver response to the previously provided information; receiving a request for information from the vehicle driver from an information terminal, the information terminal comprising a vehicle state detection device and a vehicle driver state detection device, said vehicle state detection device comprising at least one vehicle sensor; detecting a current state of the vehicle by means of the vehicle state detection device; detecting a current state of the vehicle driver by means of the vehicle driver state detection device; identifying sets of history data from said database indicating vehicle states similar to the customer's current state; selecting history data indicating a best vehicle driver response from the identified sets of history data, and adopting a corresponding information providing program selection method; selecting an information providing program from a program database using the adopted information providing program selection method and providing information to the vehicle driver from said center system to said information terminal using the selected information providing program.

Further, the present invention provides an apparatus for facilitating the provision of information to a vehicle driver, the apparatus comprising: recording means for recording sets of information provision history data each indicating an information providing program selection method used to select an information providing program to provide information previously to a vehicle driver, a corresponding vehicle state according to which the selection method was determined, and a vehicle driver response to the previously provided information; input means for receiving a request for new information from the vehicle driver; state acquisition means for ascertaining the current state of the vehicle and the vehicle driver when the request for new information is received by the input means, the state acquisition means comprising a vehicle state detection device and a vehicle driver state detection device, said vehicle state detection device comprising at least one vehicle sensor; identifying means for identifying sets of history data indicating vehicle driver states similar to the vehicle driver's current state ascertained by the state acquisition means from the history data recorded at the recording means; and program selection means for selecting history data indicating a best vehicle driver response from the identified sets of history data, adopting an information providing program selection method indicated by the selected history data, and selecting an information providing program from a program database using the adopted information providing program selection method, wherein the selected information providing program is adapted to control the provision of information to the vehicle driver.

### BRIEF DESCRIPTION OF THE DRAWINGS

FIG. 1 shows the structure assumed in an information providing system adopting the method of customer preference estimation according to the present invention in an embodiment;
FIG. 2 presents a flowchart of the customer preference estimation processing implemented in the embodiment;
FIG. 3 presents a flowchart of the selection processing executed in conformance to an information providing program in the embodiment; and
FIG. 4 presents a flowchart of the selection processing executed in conformance to an information providing program in an example of a variation.

### DETAILED DESCRIPTION OF PREFERRED EMBODIMENTS

An explanation is given on an example in which the present invention is adopted in a system that plays information obtained from a center system by using an information terminal mounted on a vehicle. It is desirable that the driver of the vehicle focus his attention entirely on the driving operation. For this reason, providing information by adopting the method of customer preference estimation according to the present invention in which information matching the customer preference is provided is an ideal system for the vehicle driver.

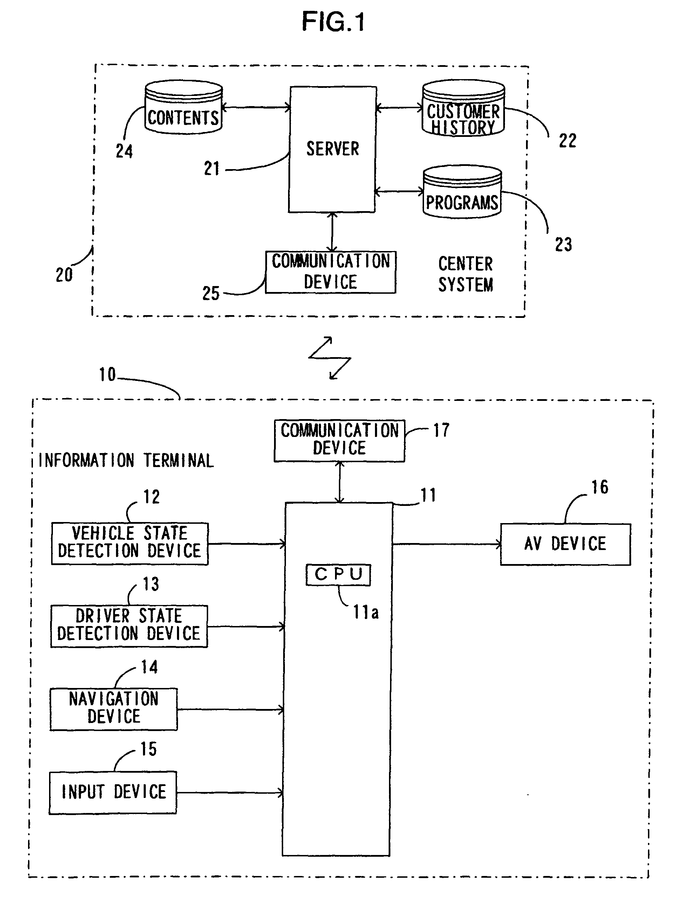

FIG. 1 shows the structure of an information providing system adopting the method of customer preference estimation according to the present invention achieved in an embodiment. The information providing system in the embodiment comprises an information terminal 10 and a center system 20. It is to be noted that while FIG. 1 shows only one information terminal 10, the system includes a plurality of similar information terminals 10.

The information terminal 10 includes a controller 11, a vehicle state detection device 12, a driver state detection device 13, a navigation device 14, an input device 15, an AV device 16, a communication device 17 and the like. The controller 11 is constituted of a CPU 11a and its peripheral components. The controller 11 accesses the center system 20 via the communication device 17, obtains the request information from the center system 20 and plays the obtained information at the AV device 16.

The vehicle state detection device 12, which includes various measuring instruments such as a vehicle speed sensor and a gearbox shift position sensor, detects the vehicle state. The driver state detection device 13, which includes various measuring instruments such as a sensor that detects whether or not the driver is seated and a camera that captures an image of the driver, detects the driver state. The navigation device 14 detects the current vehicle position through GPS (Global Positioning System) navigation or autonomous navigation. It also performs a search of a route to a destination whenever necessary and displays a roadmap, the route to the destination and the current position on a monitor at the AV device 16.

Through the input device 15, the driver inputs various types of information including the destination and numerous operations for the AV device 16 such as an information recording operation, an information playing operation, a screen operation and a volume adjustment operation are performed. The AV device 16, which includes a display unit such as an LCD (Liquid Crystal Display), an audio device such as a speaker and an information recording device such as a DVD (Digital Versatile Disk) device, records and plays information obtained from the center system 20 which may be images, music or other sound. It also displays the roadmap provided from the navigation device 14. The communication device 17 is utilized to perform wireless communication with the center system 20 either directly or via a mobile telephone.

At the center system 20, a server 21, a customer history database (hereafter referred to as a customer DB) 22, a program database (hereafter referred to as a program DB) 23, a contents database (hereafter referred to as a contents DB) 24, a communication device 25 and the like are installed. In the customer DB 22, information on previous requests made by each customer, the information providing programs used for the customer and the methods through which the information providing program was selected and the like are recorded in addition to attribute information such as the customer's age and gender. In the program DB 23, a plurality of information providing programs to be used to provide information are recorded. In the contents DB 24, various contents (various types of information) to be provided to the information terminals 10 are stored.

When there is a request for information from a customer (driver) through a specific information terminal 10, the server 21 obtains information on the current state of the customer from the information terminal 10. Then, the server 21 selects an information providing program based upon the history of the information provided to the customer in the past and the customer's current state and provides the information to the information terminal 10 in conformance to the selected information providing program.

Now, an explanation is given on the procedure implemented in the embodiment, through which the information is provided to the customer. The contents of the information provided from the center system 20 to a specific information terminal 10 is determined by the information providing program. The information providing program defines the category of information to be provided, the information source, and the specific procedure and the specific method through which the information is provided. Namely, by selecting a specific information providing program, an outline of the information being provided is determined. Accordingly, an optimal program is selected from the plurality of information providing programs stored in the program DB 23 in order to determine the outline of the information being provided.

There are numerous methods that may be adopted to select an information providing program. In the embodiment, the method of information providing program selection is determined based upon the history of the information provided to a given customer in the past and the customer's current state. In other words, during the procedure leading up to the actual information provision, the method of information providing program selection is first determined, then the optimal information providing program is selected through the selection method thus determined and the information is provided in conformance to the selected program.

Examples of programs selection methods are now explained. In a first method, from the various sets of information provided to the customer in the past that are included in history data, the information to which the customer responded most favorably is selected. In a second method, from history data of customers with similar attributes, i.e., the same gender, the same age group and similar interests, the information garnering the best customer response is selected. In a third method, the information garnering the best customer response in a state similar to the customer's current state is selected.

In this embodiment, the current state of the driver, i.e., the customer to be provided with information, is detected through the vehicle state detection device 12, the device state detection device 13, the navigation device 14, the input device 15 and the like.

The customer may be in any of the situations listed in Table 1, for instance.

**[Table 1]**

| ATTRIBUTES | TIME AND DATE | POSITION INFORMATION 1 | POSITION INFORMATION 2 | POSITION INFORMATION 3 | TRAVELING SPEED | DESTINATION |
|---|---|---|---|---|---|---|
| | 1-4 | indoor | arterial road | urban area | 0 km/h | set |
| | 5-7 | outdoor | narrow street | suburban area | 1-10 km/h | not set |
| | 8-10 | | highway | | 11-40 km/h | |
| | 11-13 | | railroad | | 41-80 km/h | |
| | 14-16 | | | | 80~ km/h | |
| | 17-19 | | | | | |
| | 20-22 | | | | | |
| | 23-1 | | | | | |

In Table 1, the customer attributes include the time and the date at which information is to be provided, position information 1 that indicates whether the vehicle is indoors or outdoors, position information 2 indicating the type of road on which the vehicle is traveling, position information 3 indicating whether the vehicle is traveling in an urban area or a suburban area, information indicating the traveling speed, information indicating whether or not a destination has been set and the like. Among these attributes, the type of road on which the vehicle is currently traveling which is provided as position information 2 and the information as to whether the vehicle is currently traveling in an urban area or a suburban area which is provided as position information 3 are detected by the navigation device 14. In addition, the traveling speed is detected by the vehicle speed sensor (not shown) included in the vehicle state detection device 12. The information with regard to whether or not a destination has been set is detected based upon whether or not a destination setting operation has been performed through the input device 15. The customer's state includes at least one of the attributes listed in Table 1. In addition, these attributes are each measured in appropriate increments. For instance, the traveling speed is assigned to one of 5 levels, i.e., from 0 km/h through above 80 km/h.

In the embodiment, the customer (driver in this case) response to information provided from the center system 20 is classified into one of four stages, i.e., very good, good, satisfactory and poor, and is expressed as a numerical value. The customer response is determined based upon an input operation performed at the input device 15. For instance, if an operation to record the provided information is performed through the input device 15, the provided information is judged to be "very good" whereas if a repeat operation is performed at 15, the provided information is judged to be "good". If an operation to simply play the provided information is performed, the provided information is judged to be "satisfactory" and if no operation is performed to play the provided information or if the playing operation is halted in the middle, the provided information is judged to be "poor".

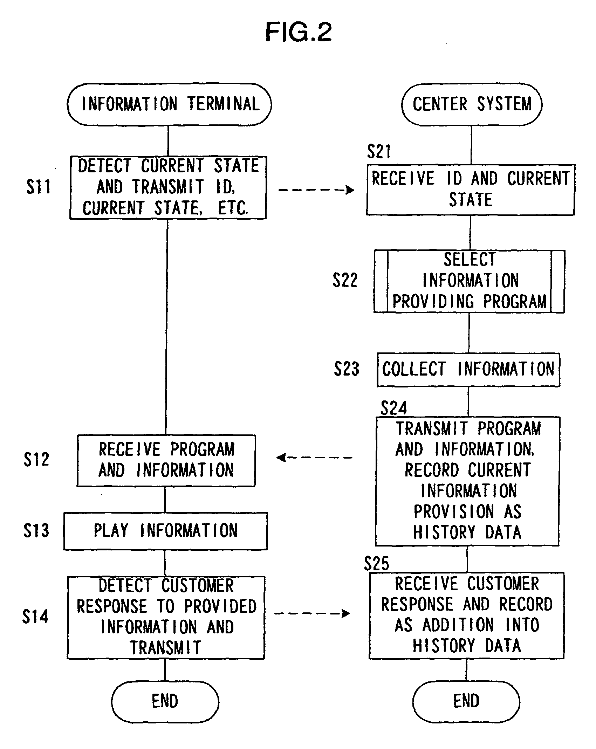

FIG. 2 presents a flowchart of the customer preference estimation processing implemented in the embodiment. The following is an explanation of the processing executed at an information terminal 10 and the processing executed at the center system 20, given in reference to the flowchart presented in FIG. 2.

As the customer performs an operation to request information through the input device 15 at the information terminal 10, the processing in step S11 and subsequent steps starts. In step 11, the controller 11 at the information terminal 10 detects the current state of the customer (the driver) (see Table 1) and transmits the detected state and the customer ID to the center system 20. The customer state is detected through the vehicle state detection device 12, the driver state detection device 13, the navigation device 14 and the input device 15 as explained earlier.

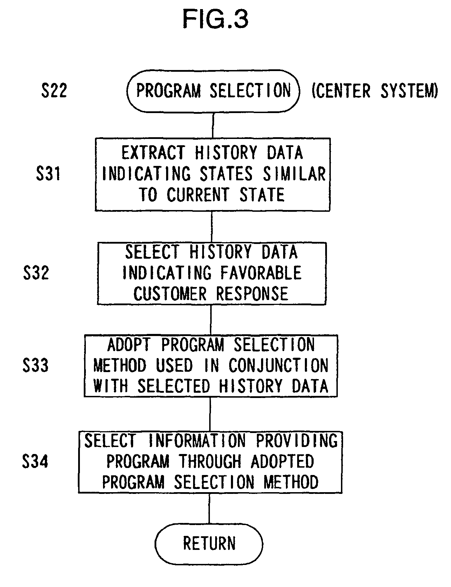

The center system 20 receives the customer ID and the customer state from the information terminal 10 in step S21 and then proceeds to step S22. In step S22, the center system 20 executes the information providing program selection processing shown in FIG. 3.

An explanation is now given on the information providing program selection process in reference to the flowchart presented in FIG. 3. In step S31, the center system 20 searches history data recorded in the customer history DB 22 and extracts a plurality of sets of history data indicating states similar to the customer's current state. It is to be noted that the similarity between the customer's current state and the state indicated in a given set of history data is expressed as a numerical value and history data with highest numerical values indicating high degrees of similarity are extracted. In the following step S32, customer response data in the extracted history data are checked and the history data indicating a favorable customer response are selected. Since each set of customer response data is expressed as a numerical value corresponding to one of the four levels as explained above, an integrated evaluation is made on the numerical values indicating the degrees of similarity to the customer's current state and the numerical values indicating various levels of customer responses and one set of history data is selected. In step S33, the information providing program selection method which was used in conjunction with the history data selected in step S32 is adopted. In step S34, the program DB 23 is searched through the selection method adopted in step S33 to select an information providing program. Once the information providing program is selected, the operation returns to step S23 in FIG. 2.

In step S23 in FIG. 2, information is collected from the contents DB 24 in conformance to the information providing program selected through the processing shown in the flowchart in FIG. 3. It is to be noted that the information source is not limited to the contents DB 24 at the center system 20 and information may be collected from all types of external information sources. In the following step S24, the collected information and the information providing program are transmitted to the information terminal 10. In addition, data related to the current information provision are recorded as history data into the customer history DB 22. In other words, the information providing program and the information that has been provided, the program selection method, the customer state according to which the selection method has been determined and the like are recorded.

In step S12, the information providing program and the information are received at the information terminal 10 from the center system 20. In step S13, which follows step S12, the information is played at the AV device 16 through the reproduction procedure which conforms to the information providing program.

In step S14, an information recording operation, a repeat operation, a playing operation, a provision halting operation or the like that is performed through the input device 15 is detected at the information terminal 10, and the customer response to the program and the information provided from the center system 20, which is expressed as a numerical value, is transmitted to the center system 20.

In step S25, the center system 20 receives the data indicating the customer response and transmitted in step S14 from the information terminal 10. The customer response data thus received are recorded as an addition to the current information provision history data recorded in the customer history DB 22 in step S24.

As described above, history data indicating states similar to the customer's current state are extracted from the customer history DB 22 and the history data having won the most favorable customer response are selected from the extracted history data. In addition, the program selection method used in conjunction with the selected history data is adopted, and an information providing program is selected from the program DB 23 through the adopted selection method. Then, information is collected in conformance to the selected program and the collected information is provided to the information terminal 10. As a result, it becomes possible to accurately estimate the customer preference which reflects any change in the customer state and, consequently, to provide the type of information best suiting the customer preference. (Another embodiment of the information providing program selection method)

In the embodiment described above, the history data indicating customer states similar to the customer's current state are extracted from the history data of the customer who has requested information. The following is an explanation of another embodiment in which the history data search is expanded to cover the history data of other customers with similar attributes to those of the customer who has requested information and history data indicating a customer state similar to the customer's current state are extracted. It is to be noted that since the processing is executed in a manner similar to that with which the processing in the preceding embodiment is executed except for the information providing program selection method adopted in this embodiment, the illustration and the explanation of the identical processing are omitted.

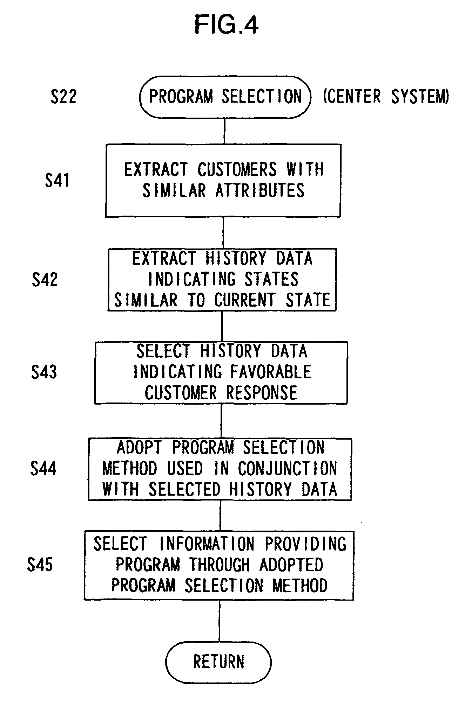

In step S22 in FIG. 2, the center system 20 executes the information providing program selection processing shown in FIG. 4 instead of the program selection processing shown in FIG. 3. In step S41 in FIG. 4, the center system 20 extracts customers with similar attributes to those of the customer who has requested the information from the customer history DB 22. In the following step S42, the history data recorded in the customer history DB 22 are searched and a plurality of sets of history data indicating states similar to the customer's current state of the customer who has requested information are extracted from the history data of the customer who has requested the information and also from the history data corresponding to the customers with similar attributes. It is to be noted that the similarity between the customer's current state and the state indicated by a given set of history data is expressed as a numerical value and history data with the highest numerical values indicating high degrees of similarity are extracted.

In the following step S43, customer response data in the history data extracted in step S42 are checked and the history data indicating a favorable customer response are selected. Since each set of customer response data is expressed as a numerical value corresponding to one of the four levels as explained above, an integrated evaluation is made on the numerical values indicating the degrees of similarity to the current customer state and the numerical values indicating levels of customer responses and one set of history data is selected. In step S44, the information providing program selection method which was used in conjunction with the history data selected in step S43 is adopted. In step S45, the program DB 23 is searched through the selection method adopted in step S44 to select an information providing program. Once the information providing program is selected, the operation returns to step S23 in FIG. 2.

In the other embodiment described above, the information providing program is selected through the following procedure. First, history data indicating states similar to the current state of the customer who has requested the information are extracted from the history data of the customer who has requested the information and the history data of customers with similar attributes. The information providing program selection method corresponding to the history data indicating a favorable customer response among the extracted history data is adopted and an information providing program is selected from the program DB 23 through the selection method thus adopted. As a result, novel and fresh information can be provided by making full use of a wider range of information provision history data. In addition, the preference of a new customer with no history data can be estimated to provide the new customer with suitable information.

It is to be noted that if the communication between the vehicle and the center system is to be achieved through a mobile telephone, the IMT - 2000 (International Mobile Telecommunications - 2000) method may be adopted instead of the PDC (Personal Digital Cellular) method or the GSM (Group System for Mobile Communications) method currently in wide use. The higher data transfer speed and the better sound quality made possible through the IMT - 2000 method improve the quality of the information that is provided and the reliability of the information provision.

The invention is defined by the appended claims.

## Claims

1. A method of providing information to a vehicle driver comprising:
recording (S14, S25) in advance sets of information provision history data (22) in a database at a center system (20) each indicating an information providing program selection method used to select an information providing program to provide information previously to a vehicle driver, a corresponding vehicle state according to which the selection method was determined, and a vehicle driver response to the previously provided information;
receiving a request for information from the vehicle driver from an information terminal (10), the information terminal (10) comprising a vehicle state detection device (12) and a vehicle driver state detection device (13), said vehicle state detection device comprising at least one vehicle sensor;
detecting (S11) a current state of the vehicle by means of the vehicle state detection device;
detecting (S11) a current state of the vehicle driver by means of the vehicle driver state detection device;
identifying (S31, S41) sets of history data from said database indicating vehicle states similar to the vehicle driver's current state;
selecting (S32, S33, S43, S44) history data indicating a best vehicle driver response from the identified sets of history data, and adopting a corresponding information providing program selection method;
selecting (S34, S45) an information providing program from a program database (23) using the adopted information providing program selection method; and
providing (S12) information to the vehicle driver from said center system (20) to said information terminal using the selected information providing program.

2. A method according to claim 1 wherein:
the vehicles state includes at least one of; date and time, current position, travelling speed and destination.

3. A method according to claim 1 or 2, wherein:
a vehicle driver response to the provided information is obtained based upon an operation performed by the vehicle driver in response to the provided information.

4. A method according to any one of claims 1 to 3 wherein the identifying step includes identifying other vehicles with similar attributes to the vehicle of the driver who has requested the information and identifying sets of history data indicating other vehicle driver states similar to the state of the current vehicle driver's state.

5. A method according to any one of claims 1 to 4, wherein:
a portable telephone adopting an IMT-2000 method is utilized as a communication means between a site that provides the information and a site that is provided with the information.

6. An apparatus for facilitating the provision of information to a vehicle driver, the apparatus comprising:
recording means (22) for recording sets of information provision history data each indicating an information providing program selection method used to select an information providing program to provide information previously to a vehicle driver, a corresponding vehicle state according to which the selection method was determined, and a vehicle driver response to the previously provided information;
input means (15) for receiving a request for new information from the vehicle driver;
state acquisition means (12, 13, 14) for ascertaining the current state of the vehicle and the vehicle driver when the request for new information is received by the input means (15), the state acquisition means comprising a vehicle state detection device (12) and a vehicle driver state detection device (13), said vehicle state detection device comprising at least one vehicle sensor;
identifying means (21) for identifying sets of history data indicating vehicle driver states similar to the vehicle driver's current state ascertained by the state acquisition means (12, 13, 14) from the history data recorded at the recording means (22); and
program selection (21) means for selecting history data indicating a best vehicle driver response from the identified sets of history data, adopting an information providing program selection method indicated by the selected history data, and selecting an information providing program from a program database (23) using the adopted information providing program selection method, wherein the selected information providing program is adapted to control the provision of information to the vehicle driver.

7. An apparatus according to claim 6 wherein the vehicle state includes at least one of; date and time, current position, travelling speed and destination.

8. An apparatus according to claim 6 or 7 wherein said identifying means is adapted to identify other vehicles with similar attributes to attributes of the vehicle of the driver who has requested the information, and to identify sets of history data indicating other vehicle driver states similar to the state of the vehicle driver's state.

## Patentansprüche

1. Verfahren zur Versorgung eines Fahrzeugfahrers mit Informationen, umfassend:
Aufzeichnen (S14, S25), im Voraus, von Informationen bereitstellenden Geschichtsdatensätzen (22) in einer Datenbank in einem zentralen System (20), die jeweils ein zur Auswahl eines Informationsversorgungsprogramms benutztes Informationsversorgungsprogramm-Auswahlverfahren zur vorherigen Versorgung eines Fahrzeugfahrers mit Informationen, einen entsprechenden Fahrzeugzustand, gemäß dem das Auswahlverfahren bestimmt wurde, und eine Fahrzeugfahrerantwort auf die vorher bereitgestellte Informationen anzeigen;
Empfangen einer Anforderung von Informationen vom Fahrzeugfahrer von einem Informationensendpunkt (10) aus, wobei derselbe Informationensendpunkt (10) eine Fahrzeugzustand-Erkennungsvorrichtung (12) und eine Fahrzeugfahrerzustand-Erkennungsvorrichtung (13) umfasst, wobei die Fahrzeugzustand-Erkennungsvorrichtung mindestens einen Fahrzeugsensor umfasst;
Erkennen (S11) des aktuellen Zustands des Fahrzeugs mittels der Fahrzeugzustand-Erkennungsvorrichtung;
Erkennen (S11) des aktuellen Zustands des Fahrzeugfahrers mittels der Fahrzeugfahrerzustand-Erkennungsvorrichtung;
Identifizieren (S31, S41) von Geschichtsdatensätzen aus der Datenbank, die Fahrzustände ähnlich dem aktuellen Zustand des Fahrzeugfahrers anzeigt;
Auswählen (S32, S33, S43, S44) von Geschichtsdaten, die eine optimale Fahrzeugfahrerantwort aus den identifizierten Geschichtsdatensätzen anzeigen, und Adoptieren eines entsprechenden Informationsversorgungsprogramm-Auswahlverfahrens;
Auswählen (S34, S45) eines Informationsversorgungsprogramms aus einer Programmdatenbank (23) unter Einsatz des adoptierten Informationsversorgungsprogramm-Auswahlverfahrens; und
Versorgen (S 12) des Fahrzeugfahrers mit Informationen vom zentralen System (20) an den Informationensendpunkt unter Einsatz des ausgewählten Informationsversorgungsprogramms.

2. Verfahren nach Anspruch 1, wobei der Fahrzeugzustand mindestens ein Element unter dem Datum und der Zeit, der aktuellen Position, der Fahrgeschwindigkeit oder dem Zielort beinhaltet.

3. Verfahren nach Anspruch 1 oder 2, wobei eine Fahrzeugfahrerantwort auf die versorgten Informationen auf Basis eines Vorgangs erhalten wird, der vom Fahrzeugfahrer in Antwort auf die versorgten Informationen durchgeführt wird.

4. Verfahren nach einem der Ansprüche 1 bis 3, wobei der Identifizierungsschritt das Identifizieren anderer Fahrzeuge mit ähnlichen Attributen wie das Fahrzeug des Fahrers, der die Informationen angefordert hat, sowie das Identifizieren von Geschichtsdatensätzen beinhaltet, die andere Fahrzeugfahrerzustände anzeigen, die dem Zustand des aktuellen Fahrzeugfahrerzustands ähnlich sind.

5. Verfahren nach einem der Ansprüche 1 bis 4, wobei ein ein IMT-2000-Verfahren adoptierendes portables Telefon als Kommunikationsmittel zwischen einem Standort, der die Informationen versorgt, und einem Standort, der mit der Informationen versorgt wird, benutzt wird.

6. Vorrichtung zur Erleichterung der Versorgung des Fahrzeugfahrers mit Informationen, welche Vorrichtung umfasst:
Aufzeichnungsmittel (22) zum Aufzeichnen von Informationen bereitstellenden Geschichtsdatensätzen, wobei jeder ein zur Auswahl eines Informationsversorgungsprogramms benutztes Informationsversorgungsprogramm-Auswahlverfahren, das zur vorherigen Versorgung eines Fahrzeugfahrers mit Informationen verwendet wird, und einen entsprechenden Fahrzeugzustand, gemäß dem das Auswahlverfahren bestimmt wird, sowohl als eine Fahrzeugfahrerantwort auf die vorher bereitgestellte Informationen anzeigen;
Eingabemittel (15) zum Empfangen einer Anforderung von neuen Informationen vom Fahrzeugfahrer;
Zustandserfassungsmittel (12, 13, 14) zum Ermitteln des aktuellen Zustands des Fahrzeugs und des Fahrzeugfahrers, wenn die Anforderung von neuen Informationen vom Eingabemittel (15) empfangen wird, wobei das Zustandserfassungsmittel eine Fahrzeugzustand-Eerkennungsvorrichtung (12) und eine Fahrzeugfahrerzustand-Erkennungsvorrichtung (13) umfasst, wobei die Fahrzeugzustand-Erkennungsvorrichtung mindestens einen Fahrzeugsensor umfasst;
Identifizierungsmittel (21) zum Identifizieren von Geschichtsdatensätzen, die Fahrzeugfahrerzustände ähnlich dem aktuellen Zustand des Fahrzeugfahrers anzeigen, die durch das Zustandserfassungsmittel (12, 13, 14) aus den am Aufzeichnungsmittel (22) aufgezeichneten Geschichtsdaten ermittelt wurden; und
Programmauswahlmittel (21) zur Auswahl von Geschichtsdaten, die eine optimale Fahrzeugfahrerantwort aus den identifizierten Geschichtsdatensätzen anzeigen, Adoptieren eines durch die ausgewählten Geschichtsdaten angezeigten Informationsversorgungsprogramm-Auswahlverfahrens, und Auswählen eines Informationsversorgungsprogramms aus der Programmdatenbank (23) unter Einsatz des adoptierten Informationsversorgungsprogramm-Auswahlverfahrens, wobei das ausgewählte Informationsversorgungsprogramm dafür geeignet ist, die Versorgung des Fahrzeugfahrers mit Informationen zu steuern.

7. Vorrichtung nach Anspruch 6, wobei der Fahrzeugzustand mindestens ein Element unter dem Datum und der Zeit, der aktuellen Position, der Fahrgeschwindigkeit oder dem Zielort beinhaltet.

8. Vorrichtung nach Anspruch 6 oder 7, wobei das Identifizierungsmittel dafür geeignet ist, andere Fahrzeuge mit ähnlichen Attributen wie das Fahrzeug des Fahrers, der die Informationen angefordert hat, sowie Geschichtsdatensätze zu identifizieren die andere Fahrzeugfahrerzustände anzeigen, die dem Zustand des aktuellen Fahrzeugfahrerzustands ähnlich sind.

## Revendications

1. Procédé de fourniture d'informations à un conducteur d'un véhicule, comprenant les étapes:
d'enregistrement (S14, S15) préalable d'ensembles de données historiques de fourniture d'informations (22) dans une base de données au niveau d'un système central (20), indiquant chacun un procédé de sélection d'un programme de fourniture d'informations utilisé pour sélectionner un programme de fourniture d'informations, pour fournir préalablement des informations à un conducteur d'un véhicule, un état du véhicule correspondant sur la base duquel le procédé de sélection a été déterminé et une réponse du conducteur du véhicule aux informations fournies préalablement;
de réception d'une demande d'informations de la part du conducteur du véhicule à partir d'un terminal d'information (10), le terminal d'information (10) comprenant un dispositif de détection de l'état du véhicule (12) et un dispositif de détection de l'état du conducteur du véhicule (13), ledit dispositif de détection de l'état du véhicule comprenant au moins un capteur du véhicule;
de détection (S11) d'un état présent du véhicule par l'intermédiaire du dispositif de détection de l'état du véhicule;
de détection (S11) d'un état présent du conducteur du véhicule par l'intermédiaire du dispositif de détection de l'état du conducteur du véhicule;
d'identification (S31, S41) d'ensembles de données historiques à partir de ladite base de données, indiquant des états de véhicule similaires à l'état présent du conducteur du véhicule;
de sélection (S32, S33, S43, S44) de données historiques indiquant une réponse optimale du conducteur du véhicule sur la base des ensembles de données historiques identifiés et d'adoption d'un procédé de sélection d'un programme fournissant les informations correspondant;
de sélection (S34, S45) d'un programme de fourniture d'informations à partir d'une base de données de programmes (23) utilisant le procédé de sélection du programme de fourniture d'informations adopté; et
de fourniture (S12) d'informations au conducteur du véhicule à partir dudit système central (32) vers ledit terminal d'informations en utilisant le programme de fourniture d'informations sélectionné.

2. Procédé selon la revendication 1, dans lequel l'état du véhicule englobe au moins un élément parmi la date et l'heure, la position effective, la vitesse de roulement et la destination.

3. Procédé selon les revendications 1 ou 2, dans lequel une réponse du conducteur du véhicule aux informations fournies est obtenue sur la base d'une opération effectuée par le conducteur du véhicule en réponse aux informations fournies.

4. Procédé selon l'une quelconque des revendications 1 à 3, dans lequel l'étape d'indentification englobe l'identification d'autres véhicules présentant des attributs similaires au véhicule du conducteur ayant demandé les informations, et l'identification d'ensembles de données historiques indiquant d'autres états du conducteur du véhicule similaires à l'état présent du conducteur du véhicule.

5. Procédé selon l'une quelconque des revendications 1 à 4, dans lequel un téléphone portable adoptant un procédé IMT-2000 est utilisé comme moyen de communication entre un site fournissant les informations et un site recevant les informations.

6. Dispositif destiné à faciliter la fourniture d'informations à un conducteur de véhicule, le dispositif comprenant:
un moyen d'enregistrement (22) pour enregistrer des ensembles de données historiques de fourniture d'informations, indiquant chacun un procédé de sélection d'un programme de fourniture d'informations utilisé pour sélectionner un programme de fourniture d'informations, pour fournir préalablement des informations à un conducteur du véhicule, un état correspondant du véhicule sur la base duquel le procédé de sélection a été déterminé et une réponse du conducteur du véhicule aux informations fournies préalablement;
un moyen d'entrée (15) pour recevoir une demande de nouvelles informations de la part du conducteur du véhicule;
un moyen d'acquisition de l'état (12, 13, 14) pour déterminer l'état présent du véhicule et du conducteur du véhicule lors de la réception de la demande de nouvelles informations par le moyen d'entrée (15), le moyen d'acquisition de l'état comprenant un dispositif de détection de l'état du véhicule (12) ainsi qu'un dispositif de détection de l'état du conducteur (13), ledit dispositif de détection de l'état du véhicule comprenant au moins un capteur de véhicule;
un moyen d'identification (21) pour identifier des ensembles de données historiques indiquant des états de conducteur du véhicule similaires à l'état présent du conducteur du véhicule déterminé par le moyen d'acquisition de l'état (12, 13, 14) sur la base des données historiques enregistrées par le moyen d'enregistrement; et
un moyen de sélection (21) de programme pour sélectionner des données historiques indiquant une réponse optimale du conducteur du véhicule sur la base des ensembles de données historiques identifiés, en adoptant un procédé de sélection de programme de fourniture d'informations à partir d'une base de données de programme (23) en utilisant le procédé de sélection de programme de fourniture d'informations adopté, le programme de fourniture d'informations sélectionné étant adapté pour contrôler la fourniture d'informations au conducteur du véhicule.

7. Dispositif selon la revendication 6, dans lequel l'état du véhicule englobe au moins un élément parmi la date et l'heure, la position effective, la vitesse de roulement et la destination.

8. Dispositif selon les revendications 6 ou 7, dans lequel ledit moyen d'identification est adapté pour identifier d'autres véhicules présentant des attributs similaires aux attributs du véhicule du conducteur ayant demandé les informations et pour identifier des ensembles de données historiques indiquant d'autres états du conducteur du véhicule similaires à l'état du conducteur du véhicule.
